# EUROPEAN PATENT APPLICATION

(11) **EP 1 616 718 A2**
(43) Date of publication of application: **18.01.2006**
(21) Application number: 05254427.7
(22) Date of filing: 14.07.2005
(51) Int. Cl.: B60B 33/00

(54) **Caster with remotely controlled brake**

(30) Priority: 15.07.2004 US 588054 P
(71) Applicant: HILL-ROM, INC., Batesville Indiana 47006 (US)
(72) Inventor: Hornbach, David W., Brookville Indiana 47012 (US); Haufler, Mark, Cincinnati Ohio 45238 (US)
(74) Representative: Findlay, Alice Rosemary

(57) **Abstract**

A caster apparatus comprising an axle, at least one wheel coupled to the axle; a housing coupled to the axle, a cylinder providing an axis of rotation for the axle, wheel, and housing, the cylinder defining a first footprint relative to a floor; and a brake, the brake being at least partially received within the cylinder and the brake defining a second footprint relative to the floor, the second footprint being fully within the first footprint.

## Description

### Background

This invention relates to casters attached to a base frame for rolling a frame from location to location and a braking mechanism for controlling the casters.

Hospital beds are typically designed to be moved from location to location in a hospital or other health care facility. Therefore, beds have wheels or casters which permit the hospital bed to be rolled and steered between locations. During movement it is desirable to have free rolling wheels but upon reaching the desired location, brakes are usually applied to the wheels to maintain the bed at the desired location.

It is well known to provide hospital beds with brake/steer casters which include mechanisms for blocking the rotation of the casters, i.e. braking mechanisms. Some beds with four caster wheels include pedals located on opposite sides of the bed which control the braking. Examples of such beds are shown in U.S. Patent No. 5,377,372 and PCT Publication No. WO 00/51830 both of which are incorporated herein by reference.

### Summary of the Invention

According to one embodiment of the present invention, A caster apparatus is provided comprising an axle, at least one wheel coupled to the axle, a housing coupled to the axle, a cylinder providing an axis of rotation for the axle, wheel, and housing, the cylinder defining a first footprint relative to a floor, and a brake. The brake is at least partially received within the cylinder and the brake defines a second footprint relative to the floor, the second footprint being fully within the first footprint.

Additional features and advantages of the invention will become apparent to those skilled in the art upon consideration of the following detailed description of illustrated embodiments.

### Brief Description of the Drawings

The detailed description of the drawings particularly refers to the accompanying Figures in which:
Fig. 1 is a perspective view of a caster apparatus including a brake; and
Fig. 2 is an exploded view of the caster apparatus of Fig. 1.

### Detailed Description of the Drawings

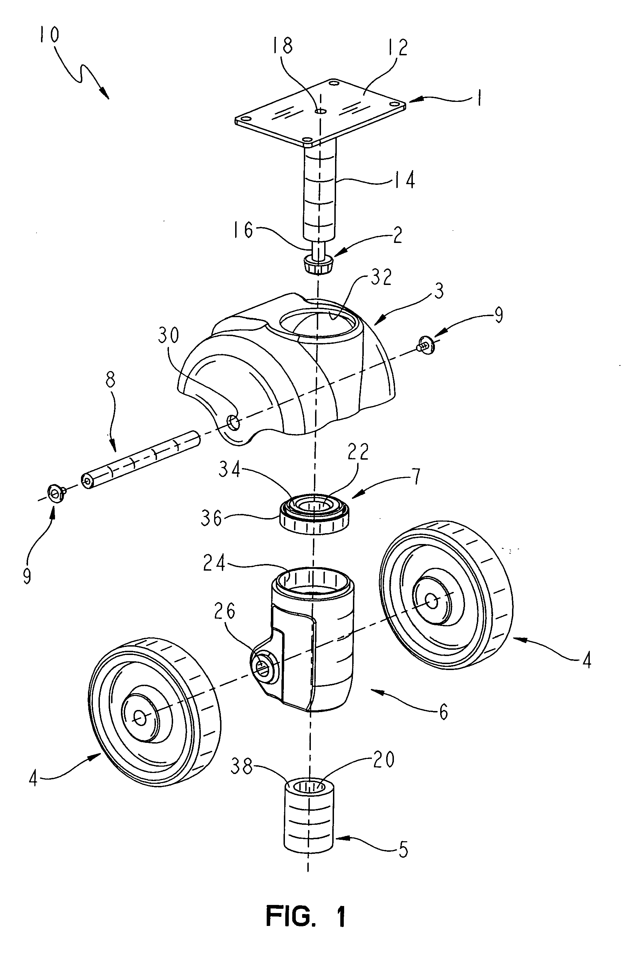

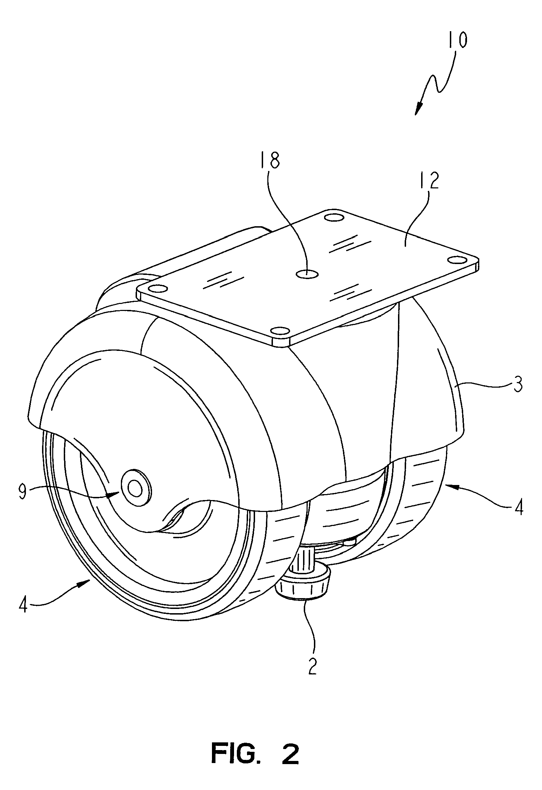

Referring to the drawings, Figs. 1 and 2 illustrate a caster apparatus 10 of the present invention. The caster apparatus 10 includes a hydraulic actuator 1, a housing 6 that partially receives actuator 1 therein, a roller bearing 7 and axle bearing 5 that allow housing 6 to rotate relative to actuator 1, a cover 3, a pair of wheels 4, an axle 8 that rotatably couples wheels 4 to housing 6 and cover 3, and end caps 9 that couple wheels 4 to axle 8.

In the pictured embodiment, actuator 1 is a hydraulic actuator including a mount plate 12, a cylinder 14 coupled to mount plate 12, a piston 16 slidably received in cylinder 14, a spring (not pictured) located within cylinder 14, and a stop 2 made of rubber or other suitable soft material attached to an exposed end of piston 16. Although actuator 1 is described herein as a hydraulic actuator, other actuators may be used including pneumatic actuators, electrical actuators, and any other suitable actuators.

Mount plate 12 is generally flat and rectangular with a plurality of apertures therein. Illustratively, five apertures are shown, one near each corner and a centrally located hydraulic aperture 18. The apertures near the corners of mount plate 12 are positioned and sized for attaching mount plate 12 to a larger structure such as a patient support. Hydraulic aperture 18 is generally centrally located to align with cylinder 14. Hydraulic aperture 18 is configured to attach to a hydraulic line (not pictured) and to conduct hydraulic fluid between the hydraulic line and cylinder 14.

Cylinder 14 is sized to be received within housing 6 and bearings 5, 7 and includes a bore therein (not pictured) to receive piston 16 and the spring therein. Hydraulic actuator 1, and more specifically cylinder 14, acts as a rotation axle for caster apparatus 10. Piston 16 is slidably received in cylinder 14 such that hydraulic fluid supplied to cylinder 14 urges piston 16 out of cylinder 14. Cylinder 14 and piston 16 are attached to a patient support via plate 12 so as to place cylinder 14 and piston 16 in a generally perpendicular orientation relative to and in close proximity to a floor. As such, extension of piston 16 out of cylinder 14 causes rubber stop 2 on the end of piston 16 to abut the floor causing a frictional relationship therebetween, thus braking the caster apparatus. The spring (not pictured) biases piston 16 to retract into cylinder 14. Therefore, while pressure generated by the introduction of hydraulic fluid to cylinder 14 can overcome the force of the spring, in the absence of such hydraulic force, the spring retracts piston 16 into cylinder 14. Thus, piston 16 of actuator 1 is biased to a non-braking position.

Bearings 5, 7 are generally ring-like, are received within a cylinder bore 24 of housing 6, and include cylinder bores 20, 22 respectively to receive cylinder 14 therein. Bearings 5, 7 allow housing 6 to rotate relative to cylinder 14. Bearing 7 provides an upper bearing surface 34 that contacts plate 12 and cylinder bore surface 36 to abut and slidably engage cylinder 14. Bearing 5 provides a cylinder bore surface 38 to abut and slidably engage cylinder 14.

Housing 6 is a generally cylindrical body including cylinder bore 24 and axle bore 26. Cylinder bore 24 is illustratively a multi-diameter bore. A main section of cylinder bore 24 is sized to be just larger than cylinder 14. End sections of cylinder bore 24 are of larger diameters sized to receive bearings 5, 7 therein. Axle bore 26 is preferably of a constant diameter. Furthermore, axle bore 26 is perpendicular to and does not intersect cylinder bore 24. Axle 8 is rotatably received in axle bore 26. Wheels 4 couple, fixedly or rotatably, to axle 8.

Cover 3 approximates a half-shell with axle bores 30 and a cylinder bore 32 defined therein. Cover 3 couples to axle 8 such that cover 3 shields the upper sides of wheels 4 and housing 6 while allowing the respective lower ends of wheels 4 and housing 6 to extend therebelow. Cylinder bore 32 is sized and shaped to allow cylinder 14 and bearing 7 to extend therethrough.

Housing 6, bearings 5, 7, cover 3, axle 8, and wheels 4 combine to form a wheel assembly that freely rotates relative to actuator 1. Alternatively, bearing 5 fixedly attaches to cylinder 14 and is designed to slidingly bear against housing 6. In such an embodiment, bearing 5 prevents housing 6 from sliding off cylinder 14 in that bearing 5 is larger than the main section of cylinder bore 24.

The size and placement of wheels 4, axle 8, housing 6, and hydraulic actuator 1 are configured such that when piston 16 is withdrawn into cylinder 14, rubber stop 2 is not in contact with the floor. Furthermore, extension of piston 16 through hydraulic activation causes rubber stop 2 to frictionally engage the floor to cause braking. In another embodiment, hydraulic activation of actuator 1 causes extension of piston 16 which raises wheels 4 out of contact with the floor to likewise cause braking.

As previously discussed, bearings 5, 7 allow housing, and thus wheels 4 attached thereto, to rotate relative to hydraulic actuator 1 to provide a rotating caster. Thus, the location and orientation of hydraulic actuator 1 provides a rotating caster with a hydraulically activated brake located within the footprint of a rotation axle of the caster.

In use, caster apparatus 10 is selectively hydraulically activated. Hydraulic fluid is supplied to caster apparatus 10 to activate hydraulic actuator 1. Activation of hydraulic activator 1 extends piston 16 out of cylinder 14 such that rubber stop 2 abuts the floor. The abutment of rubber stop 2 with the floor causes a frictional engagement to brake the caster apparatus 10 and any patient support or other device attached thereto. Removal of hydraulic fluid from caster apparatus 10 is effected either through the application of negative pressure to cylinder 14 or by reduction in pressure applied to cylinder 14 to allow the spring to push fluid out of cylinder 14 with piston 16. Removal of hydraulic fluid from cylinder 14 allows rubber stop 2 to disengage from the floor. Disengagement allows caster apparatus 10 to roll and rotate to transport the patient support or other device.

Many caster apparatus 10 may be linked together so as to be activated and deactivated simultaneously. Alternatively, each caster apparatus 10 is independently activated to selectively assist in steering the patient support or for some other purpose.

It should be appreciated that the present invention has applications in the area of bariatric care. Often, bariatric patients are difficult to move from one patient support to another. Accordingly, it is desirable to be able to perform surgeries on a long term care patient support or an otherwise mobile patient support such that movement between a plurality of patient supports is not necessary. However, during surgical procedures it is also desirable for the patient support to be stationary. Thus, the present invention allows a usually mobile patient support to achieve stability suitable for surgical procedures.

In another embodiment, caster apparatus 10 of the present invention is be linked with a powered drive system such as those described in U.S. Patent No. 6,749,034 titled MOTORIZED TRACTION DEVICE FOR A PATIENT SUPPORT and U.S. Patent Application Serial No. 10/336,576 titled BRAKING APPARATUS FOR A PATIENT SUPPORT. In one such embodiment, engagement of push handles that activate a drive system would also de-energize caster apparatus 10 to release any braking being performed thereby.

## Claims

1. A caster apparatus comprising:
an axle (8);
at least one wheel (4) coupled to the axle;
a housing (6) coupled to the axle;
a cylinder (14) providing an axis of rotation for the axle, wheel, and housing, the cylinder defining a first footprint relative to a floor; and
a brake (2), the brake being at least partially received within the cylinder ( 14) and the brake defining a second footprint relative to the floor, the second footprint being fully within the first footprint.

2. A caster as claimed in claim 1, wherein the brake has a first position wherein the brake is out of contact with the floor and a second position wherein the brake is in contact with the floor.

3. A caster as claimed in claim 1 or claim 2, wherein the brake is hydraulically actuated.

4. A caster as claimed in any preceding claim, wherein the brake is biased to a position to place the brake out of contact with the floor.

5. A caster as claimed in any preceding claim, wherein the brake is a hydraulically activated piston.

6. A caster as claimed in any preceding claim, wherein the cylinder is of a constant horizontal cross section.

7. A caster as claimed in any preceding claim, wherein the cylinder is of a constant diameter.

8. A caster as claimed in any preceding claim, wherein the cylinder includes a spring therein to bias the brake.

9. A caster as claimed in any preceding claim, wherein the brake is biased to a position such that the brake is substantially housed within the cylinder.

10. A caster as claimed in any preceding claim, wherein the cylinder is hydraulically activated and is linked to a drive mechanism.
